# EUROPEAN PATENT SPECIFICATION

(11) **EP 3 632 729 B1**
(45) Date of publication and mention of the grant of the patent: **03.11.2021**
(21) Application number: 19200533.8
(22) Date of filing: 30.09.2019
(51) Int. Cl.: B60K 1/00, B60K 7/00, B60K 17/354, B60K 17/356, B60K 17/34, B62D 24/04

(54) **SELF-PROPELLED CART FOR TRANSPORTING HEAVYLOADS**
SELBSTFAHRENDER WAGEN ZUM TRANSPORT VON SCHWERLASTEN
CHARIOT AUTOPROPULSÉ POUR LE TRANSPORT DE CHARGES LOURDES

(30) Priority: 02.10.2018 IT 201800009097
(43) Date of publication of application: 08.04.2020
(73) Proprietor: ITALCARRELLI S.p.A., 36072 Chiampo (VI) (IT)
(72) Inventor: NEGRIN, Alessandro, 36072 CHIAMPO (VI) (IT)
(74) Representative: Bellemo, Matteo

(56) References cited:
- EP-A1- 1 582 445
- DE-A1- 4 327 961
- JP-A- 2003 341 544
- US-A1- 2003 193 234

## Description

### CROSS-REFERENCE TO RELATED APPLICATIONS

This patent application claims priority from Italian patent application no. 102018000009097 filed on 02/10/2018.

### TECHNICAL FIELD

The present invention relates to a self-propelled cart for transporting heavy loads .

More in detail, the present invention relates to a remote-guided self-propelled cart suitable for transporting very heavy items in narrow spaces. Use to which the following disclosure will explicitly refer without thereby losing its general character.

### BACKGROUND ART

As already known, the self-propelled carts for transporting heavy-loads are basically made up of a large plate-like self-supporting chassis that extends parallel to the ground and has on top a large horizontal loading deck usually rectangular in shape, on which the item to be transported is to be rested; and of a series of vertical-axis motorized pivoting wheel assemblies that are located beneath the plate-like chassis in pairs on opposite sides of the vertical midplane of the cart.

The self-propelled carts described above are moreover provided with a remote control that allows an operator to remotely control the various pivoting wheel assemblies, so as to drive the self-propelled cart at a distance.

Each pivoting wheel assembly, in turn, is usually provided with an upper slewing bearing, which is fixed to the plate-like chassis with the capability of rotating on command about a corresponding vertical axis; with a motorized horizontal axle, which is arranged beneath the slewing bearing and has two twinned rubber ground-resting wheels; and with a hydraulic suspension that is interposed between the slewing bearing and the axle and is designed to vary, on command, the height of the chassis from the ground.

More in detail, the two rubber wheels are arranged on opposite sides of the horizontal axle which, in turn, is connected to the upper slewing bearing in a vertically tilting/swivelling manner. The hydraulic suspension, on the other hand, is interposed between the slewing bearing and the horizontal axle and is adapted to vary, on command, the distance between the slewing bearing and the rotation axis of the two ground-resting wheels of the axle.

The hydraulic motor that drives the two wheels into rotation is housed inside the horizontal axle, coaxial to the two ground-resting wheels, so as to drive into rotation the two ground-resting wheels at same time.

Unfortunately, the pivoting wheel assemblies described above, and more specifically the motorized horizontal axles, have a considerable size and must be able to rotate beneath the chassis without interfering with one another, therefore it is not physically possible to reduce the dimensions (length and width) of the plate-like chassis beyond a certain limit. Constructive limit that obviously prevents from manufacturing small self-propelled carts for transport of heavy loads which are particularly suitable for moving in narrow spaces.

EP1582445 A1 discloses a pivoting wheel assembly wherein the horizontal axle is provided with two electric motors arranged adjacent to one another in between the ground resting wheels and coaxial to the wheels rotation axis.

JP2003341544 A, in turn, discloses a self-propelled cart.

### DISCLOSURE OF INVENTION

Aim of the present invention is to realize motorized horizontal axles that are more compact than those currently used in pivoting wheel assemblies, so as to significantly reduce the overall dimensions of the plate-like chassis and, thus, of the whole self-propelled cart for transporting heavy-loads.

In compliance with these aims, according to the present invention there is provided a self-propelled cart for transporting heavy-loads as defined in claim 1 and preferably, though not necessarily, in any one of the claims dependent on it.

### BRIEF DESCRIPTION OF THE DRAWINGS

The present invention will now be described with reference to the annexed drawings showing a non-limiting embodiment thereof, in which:
- Figure 1 is an axonometric view of a self-propelled cart for transporting heavy loads realized according to the teachings of the present invention;
- Figure 2 is a front view of the self-propelled cart shown in Figure 1, with parts removed for clarity's sake;
- Figure 3 is a side view of the self-propelled cart shown in Figure 1, in two different operating configurations;
- Figure 4 is an axonometric view of one of the pivoting wheel assemblies of the self-propelled cart shown in Figures 1, 2 and 3, with parts removed for clarity's sake;
- Figure 5 is a side view of the pivoting wheel assembly shown in Figure 4, with parts removed for clarity's sake; whereas
- Figure 6 is a partially-exploded axonometric view of the pivoting wheel assembly shown in Figures 4 and 5.

### BEST MODE FOR CARRYING OUT THE INVENTION

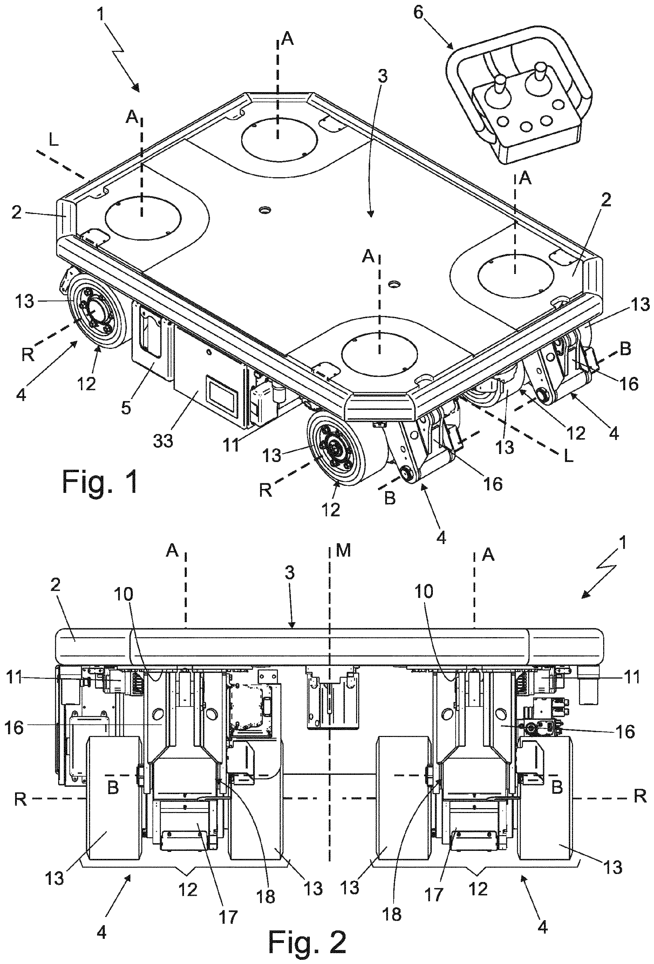

With reference to Figures 1, 2 and 3, number 1 denotes as a whole a self-propelled cart for transporting heavy loads that is particularly suitable for moving in narrow spaces.

The self-propelled cart 1 firstly comprises: a substantially plate-like self-supporting chassis 2 preferably made of metal material, which extends substantially parallel to the ground, i.e. horizontally, and is superiorly provided with a large, substantially horizontal and preferably flat, loading deck 3 on which the item to be transported is rested; and a series of pivoting wheel assemblies 4, which are arranged beneath the chassis 2, preferably in pairs on the opposite sides of the vehicle vertical midplane M.

The self-propelled cart 1 moreover comprises: an electronic control unit 5 which is located on the chassis 2 and is adapted to command the various pivoting wheel assemblies 4; and preferably also a remote control 6 for remote driving, which is separated and discrete from the rest of the vehicle, and is adapted to control the electronic control unit 5 so as to allow an operator to drive the self-propelled cart 1 from afar.

In the example shown, in particular, the chassis 2 is preferably substantially rectangular, and the loading deck 3 preferably takes up substantially the whole upper face of the chassis 2.

Preferably, the electronic control unit 5 is additionally fixed/hanged beneath the chassis 2, between the pivoting wheel assemblies 4.

Furthermore, the self-propelled cart 1 is preferably provided with two pairs of pivoting wheel assemblies 4.

More in detail, in the example shown the self-propelled cart 1 is preferably provided with four pivoting wheel assemblies 4, arranged at the four vertexes of the chassis 2.

In other words, in the example shown the self-propelled cart 1 preferably has four pivoting wheel assemblies 4, arranged at the vertexes of a rectangle.

Preferably, the remote control 6 finally communicates with the electronic control unit 5 via wireless signals.

Obviously, in a different embodiment the remote control 6 could communicate with the electronic control unit 5 via an umbilical cable.

With reference to Figures 1 to 5, each pivoting wheel assembly 4 is fixed underneath the chassis 2 with the capability of rotating, on command, about a preferably substantially vertical, own reference axis A, and is provided with an active suspension, preferably of hydraulic or pneumatic type, that is designed to vary, on command, the height of the chassis 2 from the ground.

In other words, each pivoting wheel assembly 4 comprises: an upper slewing bearing 10 that is fixed to the chassis 2 with the capability of freely rotating about axis A; an electronically-controlled servo-motor 11 which is adapted to rotate, on command, the slewing bearing 10 about axis A, so as to vary the angular position of the slewing bearing 10 with respect to a given angular reference, i.e. the orientation of the slewing bearing 10 with respect to the vehicle longitudinal axis L; a horizontal axle 12 which is located beneath the slewing bearing 10, is connected to the slewing bearing 10 so as to rotate about axis A together with this latter, and is provided with at least two coaxial ground-resting wheels 13 preferably made of rubber; and an electronically-controlled active suspension 14 which is interposed between the horizontal axle 12 and the slewing bearing 10, and is adapted to vary, on command, the distance d between the plane on which the slewing bearing 10 lies and rotates and the rotation axis R of the two wheels 13.

More in detail, the horizontal axle 12 is laterally pivoted/hinged to the slewing bearing 10 so as to be able to swing/tilt with respect to the slewing bearing 10 about a reference axis B, which is substantially perpendicular to the axis A and is at same time substantially parallel and spaced from rotation axis R of the ground-resting wheels 13. The active suspension 14, in turn, is adapted to vary/adjust the position of the horizontal axle 12 with respect to the slewing bearing 10.

The horizontal axle 12 of at least one and preferably all the pivoting wheel assemblies 4 of the self-propelled cart 1 is additionally provided with a preferably electric or hydraulic engine 15, which is designed to drive the wheels 13 of the axle into rotation about the common axis R.

The electronic control unit 5 is adapted to command the servo-motor 11, the suspension 14 and, if present, the engine 15 of each individual pivoting wheel assembly 4 of the vehicle.

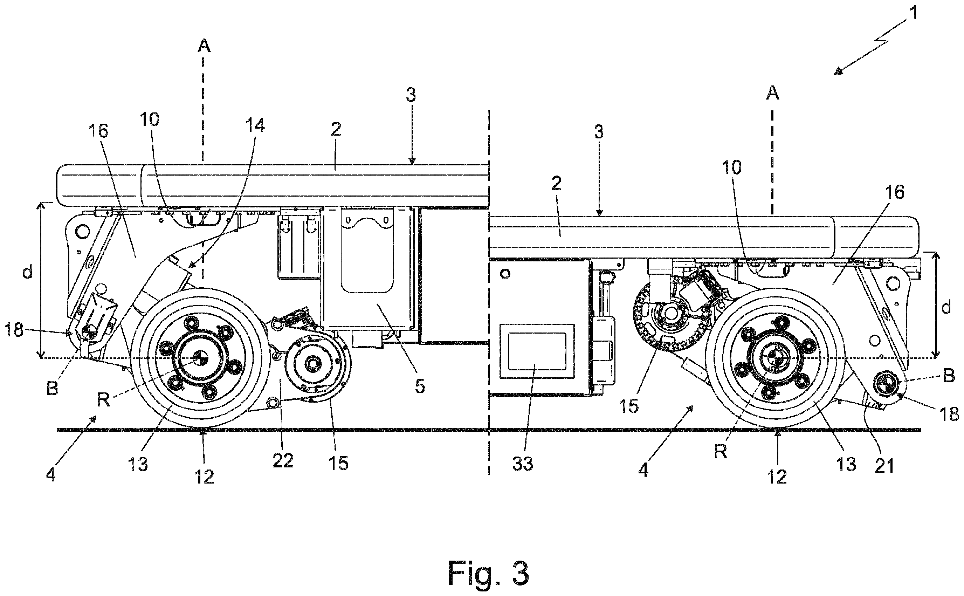

With reference to Figures 3, 4, 5 and 6, in the example shown, in particular, the slewing bearing 10 is preferably provided with a transversal projecting arm 16 which cantileverly extends downwards with a given tilting angle with respect to the plane on which the slewing bearing 10 lies and rotates, preferably while also remaining substantially coplanar and/or eccentric with respect to axis A.

The horizontal axle 12, in turn, is preferably pivoted/ hinged to the distal end of the transversal arm 16 of the slewing bearing 10, so as to be able to swing/tilt about axis B.

In other words, horizontal axle 12 is preferably pivoted/ hinged to the distal end of transversal arm 16 in a vertically tilting/swivelling manner.

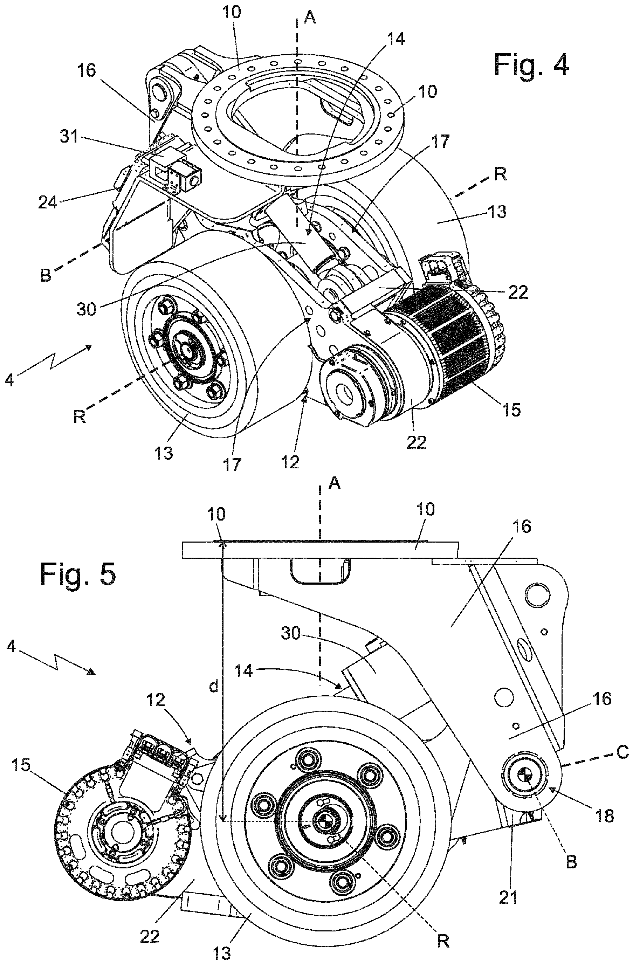

More in detail, with reference to Figures 4, 5 and 6, the horizontal axle 12 comprises a central hub 17, which extends between the two ground-resting wheels 13 of the axle 12 coaxial to rotation axis R, supports in axially rotatable manner the two wheels 13, and is laterally connected to the slewing bearing 10, or rather to the distal end of transversal arm 16, via a hinge 18 that allows the central hub 17 to freely swing/tilt about axis B and is preferably arranged on the midplane of the central hub 17. Preferably, the transversal arm 16 of slewing bearing 10 additionally lies on the midplane of the central hub 17.

Preferably the central hub 17 furthermore accommodates, inside itself, a differential gear 19 and two drive shafts 20 that are arranged on opposite sides of the differential gear 19 and transmit the rotary motion from the differential gear 19 to the two ground-resting wheels 13.

Preferably, the horizontal axle 12 moreover comprises an intermediate mechanical joint 21 which is interposed between the central hub 17 and the hinge 18, and allows the central hub 17 to freely rotate/swing by some degrees about a reference axis C substantially perpendicular and coplanar to axes B and R.

In the example shown, in particular, the central hub 17 is preferably provided with two lateral plate-like portions or sides which are arranged substantially perpendicular to the axes B and R, on opposite sides of axis A and each adjacent to a respective wheel 13, and are engaged in pass-through and axially rotatable manner each by a respective drive shaft 20; whereas the differential gear 19 is preferably located between the two lateral plate-like portions.

The engine 15, on the other hand, is arranged outside of the central hub 17, spaced beside the central hub 17 and preferably also beside at least one of the two ground-resting wheels 13 of axle 12, substantially on the opposite side with respect to the hinge 18.

More in detail, the engine 15 is firmly fixed to a transversal support bracket 22 that cantileverly projects from the central hub 17 more or less on the opposite side with respect to the hinge 18, preferably in a substantially radial direction.

Preferably, the transversal support bracket 22 furthermore has a plate-like structure substantially perpendicular to axis R, and the engine 15 is preferably cantileverly fixed to the distal end of the transversal support bracket 22 so as to cantileverly extend parallel to axis R.

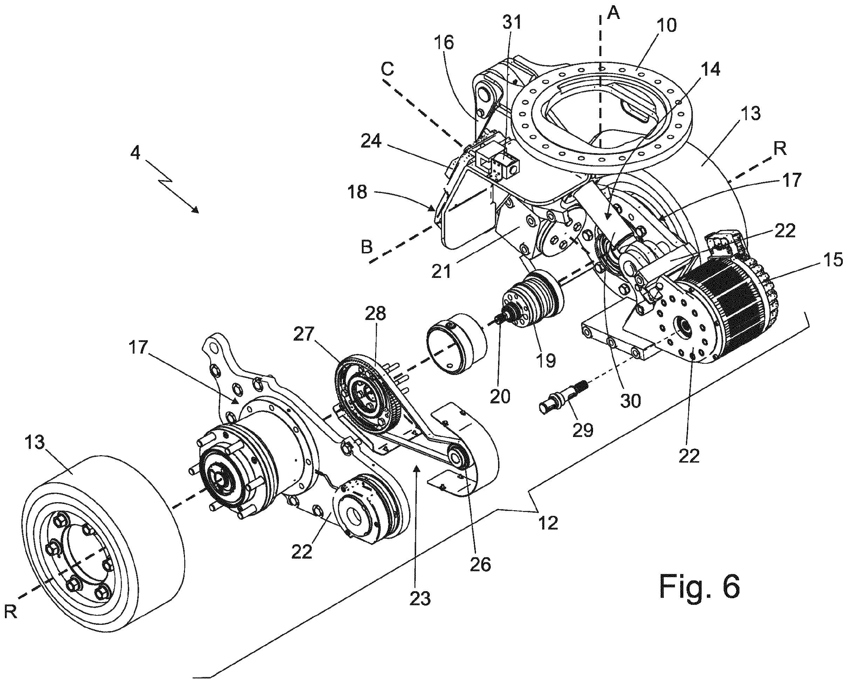

With particular reference to Figure 6, moreover, the engine 15 is connected to the two wheels 13 of the horizontal axle 12 via a transversal powertrain 23, which is preferably at least partially accommodated inside the transversal support bracket 22, and is preferably also adapted to drive into rotation the differential gear 19.

In the example shown, in particular, the engine 15 is preferably an electric motor and is butt fixed to the transversal support bracket 22 so as to cantileverly extend from the transversal support bracket 22 parallel to axis R. Preferably, this electric motor is moreover powered by an electronically-controlled power unit 24 which is preferably fixed to the transversal arm 16 of the slewing bearing 10 and is preferably commanded by the vehicle electronic control unit 5.

Preferably the transversal powertrain 23 in turn comprises: a first cogwheel 26 that is fixed in axially rotatable manner on the transversal support bracket 22 and is driven into rotation by the engine 15, or rather by the electric motor; a second cogwheel 27 which is arranged between the two wheels 13 of the axle locally coaxial to axis R, and is adapted to drive into rotation the differential gear 19; and finally a drive chain or belt 28 that is looped around the cogwheels 26 and 27.

More in detail, the cogwheel 26 is preferably keyed in angularly rigid manner to the drive shaft 29 of the engine 15, or rather of the electric motor, which in turn is fixed in angularly rotatable manner on the transversal support bracket 22.

The cogwheel 27, in turn, is preferably fixed in angularly rigid manner to the differential gear 19. Therefore, also the cogwheel 27 is arranged between the two lateral plate-like portions of the central hub 17.

In a different embodiment, however, the drive belt or chain 28 can be replaced by a transversal drive shaft, or by a cascade of gears that transfer the motion from cogwheel 26 to cogwheel 27.

With particular reference to Figures 3, 4, 5 and 6, on the other hand the active suspension 14 preferably comprises: at least one hydraulic or pneumatic cylinder 30 which is interposed between the horizontal axle 12 and the slewing bearing 10, or rather the transversal arm 16 of the slewing bearing 10, and preferably additionally lies on the mid-plane of central hub 17; and an electronically-controlled hydraulic or pneumatic distributor 31 which is preferably fixed directly to the transversal arm 16, and controls the flow of pressurized air or oil to the hydraulic or pneumatic cylinder 30 so as to be able to axially move the cylinder rod and thus adjust/vary the overall axial length of the hydraulic or pneumatic cylinder 30.

Obviously, the hydraulic or pneumatic distributor 31 is preferably controlled by the vehicle electronic control unit 5.

More in detail, in the example shown, the transversal arm 16 of slewing bearing 10 is preferably substantially L-bent, and the upper end of the cylinder 30 is preferably pivoted/hinged to the transversal arm 16 at the elbow of the arm.

Preferably, the lower end of the cylinder 30 is furthermore pivoted/hinged directly to the transversal bracket 22 that supports the engine 15.

With reference to Figures 1, 2 and 3, preferably the self-propelled cart 1 is finally provided with an electric power source 33 and/or a pressurized- air or oil source (not shown in the figures), which are preferably fixed/hanged beneath the self-supporting chassis 2, between the pivoting wheel assemblies 4.

The electric power source 33 supplies electric energy to the various pivoting wheel assemblies 4 and to the vehicle electronic control unit 5.

The pressurized- air or oil source, on the other hand, supplies the various pivoting wheel assemblies 4 with the pressurized air or oil necessary for the operation of the respective active suspensions 14.

In the example shown, in particular, the electric power source 33 preferably consists of a pack of rechargeable, and preferably also removable, batteries of known type.

The pressurized- air or oil source, on the other hand, preferably includes an electrically-operated air compressor and a pressurized-air storage tank.

Operation of self-propelled cart 1 is easily inferable from the above, and therefore does not require any further explanation.

The advantages connected to the particular structure of the pivoting wheel assemblies 4 are remarkable.

The arrangement of engine 15 outside of central hub 17 of horizontal axle 12, more or less on the opposite side of hinge 18, allows to reduce the wheelbase between the two wheels 13 of horizontal axle 12, thus significantly reducing the space necessary for the correct operation of each pivoting wheel assembly 4. Circumstance that makes it possible to reduce the dimensions of the chassis 2 and, as a consequence, of the entire self-propelled cart 1, to the benefit of the vehicle maneuverability.

Moreover, accommodating the differential gear 19 and the transversal powertrain 23 of the pivoting wheel assembly 4 inside the central hub 17 allows to protect and lubricate the two components more efficiently.

It is finally clear that modifications and variations may be made to the self-propelled cart 1 described above without however departing from the scope of the present invention.

For example, the engine 15 may be a hydraulic motor.

Moreover, the horizontal axle 12 may lack the differential gear 19. In this case, the two ground-resting wheels 13 are driven into rotation by a single drive shaft, which is fitted in axially rotatable manner inside the central hub 17, and is driven into rotation by the transversal powertrain 23.

In other words, the second cogwheel 27 is fixed in angularly rigid manner to the drive shaft that drives into rotation both ground-resting wheels 13.

## Claims

1. A self-propelled cart (1) for transporting heavy loads of the type comprising: a chassis (2) having, on top, a substantially horizontal loading deck (3) on which the item to be transported rests; and a series of pivoting wheel assemblies (4) that are located beneath the chassis (2), each with the capability of rotating, on command, about a respective reference axis (A);
each pivoting wheel assembly (4) comprising: a slewing bearing (10) which is fixed to the chassis (2) with the capability of rotating about said reference axis (A) ; a servo-motor (11) which is adapted to rotate, on command, the slewing bearing (10) about said reference axis (A) ; a horizontal axle (12) which is located beneath the slewing bearing (10), is connected to the slewing bearing (10) so as to rotate together with the latter, and is provided with at least two ground-resting wheels (13) coaxial to one another; and an active suspension (14) which is interposed between the horizontal axle (12) and the slewing bearing (10), and is capable of varying, on command, the distance (d) between the plane on which the slewing bearing (10) lies and rotates and the rotation axis (R) of the two wheels (13);
the horizontal axle (12) of at least one of said pivoting wheel assemblies (4) comprising: a central hub (17) which extends between the two wheels (13) of the axle coaxial to the wheel rotation axis (R) and is laterally connected to the slewing bearing (10) via a hinge (18) that allows the central hub (17) to swing about a first axis (B) which is perpendicular to said reference axis (A) and is parallel and spaced from the wheel rotation axis (R); and an engine (15) adapted to drive into rotation the wheels (13) of the axle about the common rotation axis (R);
wherein the engine (15) is located outside of the central hub (17), is arranged parallel to the wheel rotation axis (R), is
spaced beside the central hub (17), is supported by a transversal bracket (22) that protrudes from the central hub (17) on the opposite side with respect to the hinge (18), and is connected to the wheels (13) of the horizontal axle (12) via a transversal powertrain (23).

2. Self-propelled cart according to Claim 1, wherein the transversal powertrain (23) is at least partially accommodated inside the transversal bracket (22).

3. Self-propelled cart according to Claim 1 or 2, wherein the transversal bracket (22) has a plate-like structure perpendicular to the wheel rotation axis (R), and the engine (15) is cantileverly fixed to the distal end of the transversal bracket (22).

4. Self-propelled cart according to any one of the preceding claims, wherein the engine (15) is cantileverly fixed to the distal end of said transversal support bracket (22) so as to cantileverly extend parallel to the wheel rotation axis (R).

5. Self-propelled cart according to any one of the preceding claims, wherein the central hub (17) accommodates a differential gear (19) and two drive shafts (20) that are located on opposite sides of the differential gear (19) and transmit the rotatory motion from the differential gear (19) to the wheels (13) of the axle.

6. Self-propelled cart according to Claim 5, wherein the transversal powertrain (23) drives into rotation the differential gear (19).

7. Self-propelled cart according to any one of the preceding claims, wherein the transversal powertrain (23) comprises: a first cogwheel (26) which is fixed in axially rotatable manner on the transversal bracket (22) and is driven into rotation by the engine (15); a second cogwheel (27) which is located between the wheels (13) of the axle and is designed to drive into rotation said wheels (13); and at least a third transmission gear (28) adapted to transmit the rotary motion from the first cogwheel (26) to the second cogwheel (27).

8. Self-propelled cart according to any one of the preceding claims, wherein the slewing bearing (10) is provided with a transversal protruding arm (16) that cantileverly extends downwards with a given tilting angle with respect to the plane where the slewing bearing (10) lies and rotates; the horizontal axle (12) being pivotally joined to the distal end of the transverse arm (16) of the slewing bearing (10).

9. Self-propelled cart according to any one of the preceding claims, wherein the active suspension (14) comprises at least one hydraulic or pneumatic cylinder (30) which is interposed between the horizontal axle (12) and the slewing bearing (10).

10. Self-propelled cart according to Claim 9, wherein the lower end of said at least one hydraulic or pneumatic cylinder (30) is pivotally joined/hinged to the transversal bracket (22) that supports the engine (15).

11. Self-propelled cart according to any one of the preceding claims, **characterised by** additionally comprising an electronic control unit (5) which is placed on the chassis (2) and is adapted to control the various pivoting wheel assemblies (4).

12. Self-propelled cart according to Claim 11, **characterised by** additionally comprising a remote control (6) for remote driving, which is separate and discrete from the rest of the vehicle, and is adapted to control the electronic control unit (5).

13. Self-propelled cart according to any one of the preceding claims, wherein the engine (15) is an electric or hydraulic motor.

14. Self-propelled cart according to any one of the preceding claims, wherein said reference axis (A) is vertical.

15. Self-propelled cart according to any one of the preceding claims, wherein the horizontal axle (12) moreover comprises an intermediate mechanical joint (21) which is interposed between the central hub (17) and the hinge (18), and allows the central hub (17) to freely rotate/swing by some degrees about a third axis (C) which is perpendicular and coplanar to the first axis (B) and the wheel rotation axis (R).

## Patentansprüche

1. Selbstangetriebener Wagen (1) zum Transportieren schwerer Lasten, wobei der selbstangetriebene Wagen von einem Typ ist, der Folgendes aufweist: ein Fahrgestell (2), das oben eine im Wesentlichen horizontale Ladefläche (3) aufweist, auf der der zu transportierende Gegenstand ruht; und eine Reihe von schwenkbaren Radbaugruppen (4), die unter dem Fahrgestell (2) angeordnet sind, wobei jede die Fähigkeit hat, sich auf Befehl um eine jeweilige Bezugsachse (A) zu drehen;
wobei jede schwenkbare Radbaugruppe (4) Folgendes aufweist: ein Drehlager (10), das am Fahrgestell (2) befestigt ist und sich um die genannte Bezugsachse (A) drehen kann; einen Servomotor (11), der das Drehlager (10) auf Befehl um die genannte Bezugsachse (A) drehen kann; eine horizontale Achse (12), die sich unter dem Drehlager (10) befindet, mit dem Drehlager (10) verbunden ist, um sich zusammen mit diesem zu drehen, und mit mindestens zwei zueinander koaxialen Bodenstützrädern (13) versehen ist, und eine aktive Federung (14), die zwischen der horizontalen Achse (12) und dem Drehlager (10) angeordnet ist und in der Lage ist, auf Befehl den Abstand (d) zwischen der Ebene, auf der das Drehlager (10) liegt und sich dreht, und der Drehachse (R) der beiden Räder (13) zu verändern;
wobei die horizontale Achse (12) mindestens einer der genannten schwenkbaren Radbaugruppen (4) Folgendes aufweist: eine zentrale Nabe (17), die sich zwischen den beiden Rädern (13) der Achse koaxial zur Raddrehachse (R) erstreckt und seitlich mit dem Drehlager (10) über ein Gelenk (18) verbunden ist, das es der zentralen Nabe (17) ermöglicht, um eine erste Achse (B) zu schwenken, die senkrecht zur Bezugsachse (A) und parallel und beabstandet zur Raddrehachse (R) verläuft; und einen Motor (15), der die Räder (13) der Achse um die gemeinsame Drehachse (R) in Drehung versetzen kann;
wobei der Motor (15) außerhalb der zentralen Nabe (17) angeordnet ist, parallel zur Raddrehachse (R) angeordnet ist, neben der zentralen Nabe (17) beabstandet ist, von einem Querträger (22) getragen wird, der von der zentralen Nabe (17) auf der gegenüberliegenden Seite bezüglich des Gelenks (18) vorsteht, und mit den Rädern (13) der horizontalen Achse (12) über einen quer verlaufenden Antriebsstrang (23) verbunden ist.

2. Selbstangetriebener Wagen nach Anspruch 1, wobei der quer verlaufende Antriebsstrang (23) zumindest teilweise innerhalb des Querträgers (22) untergebracht ist.

3. Selbstangetriebener Wagen nach Anspruch 1 oder 2, wobei der Querträger (22) eine plattenartige Struktur senkrecht zur Raddrehachse (R) aufweist und der Motor (15) freitragend am distalen Ende des Querträgers (22) befestigt ist.

4. Selbstangetriebener Wagen nach einem der vorhergehenden Ansprüche, wobei der Motor (15) freitragend am distalen Ende des Querträgers (22) befestigt ist, so dass er sich freitragend parallel zur Raddrehachse (R) erstreckt.

5. Selbstangetriebener Wagen nach einem der vorhergehenden Ansprüche, wobei die zentrale Nabe (17) ein Differentialgetriebe (19) und zwei Antriebswellen (20) aufnimmt, die auf gegenüberliegenden Seiten des Differentialgetriebes (19) angeordnet sind und die Drehbewegung vom Differentialgetriebe (19) auf die Räder (13) der Achse übertragen.

6. Selbstangetriebener Wagen nach Anspruch 5, wobei der quer verlaufende Antriebsstrang (23) das Differentialgetriebe (19) in Drehung versetzt.

7. Selbstangetriebener Wagen nach einem der vorhergehenden Ansprüche, wobei der quer verlaufende Antriebsstrang (23) Folgendes aufweist: ein erstes Zahnrad (26), das axial drehbar am Querträger (22) befestigt ist und vom Motor (15) in Drehung versetzt wird; ein zweites Zahnrad (27), das zwischen den Rädern (13) der Achse angeordnet ist und dazu dient, diese Räder (13) in Drehung zu versetzen; und mindestens ein drittes Übertragungsgetriebe (28), das die Drehbewegung vom ersten Zahnrad (26) auf das zweite Zahnrad (27) übertragen kann.

8. Selbstangetriebener Wagen nach einem der vorhergehenden Ansprüche, wobei das Drehlager (10) mit einem querverlaufenden, vorstehenden Arm (16) versehen ist, der sich freitragend nach unten mit einem gegebenen Neigungswinkel in Bezug auf die Ebene erstreckt, in der das Drehlager (10) liegt und sich dreht; wobei die horizontale Achse (12) schwenkbar mit dem distalen Ende des querverlaufenden Arms (16) des Drehlagers (10) verbunden ist.

9. Selbstangetriebener Wagen nach einem der vorhergehenden Ansprüche, wobei die aktive Federung (14) mindestens einen hydraulischen oder pneumatischen Zylinder (30) aufweist, der zwischen der horizontalen Achse (12) und dem Drehlager (10) angeordnet ist.

10. Selbstangetriebener Wagen nach Anspruch 9, wobei das untere Ende des mindestens einen Hydraulik- oder Pneumatikzylinders (30) schwenkbar mit dem Querträger (22) verbunden/gelenkt ist, der den Motor (15) trägt.

11. Selbstangetriebener Wagen nach einem der vorhergehenden Ansprüche, **dadurch gekennzeichnet, dass** er zusätzlich eine elektronische Steuereinheit (5) aufweist, die auf dem Fahrgestell (2) angeordnet ist und zur Steuerung der verschiedenen schwenkbaren Radbaugruppen (4) geeignet ist.

12. Selbstangetriebener Wagen nach Anspruch 11, **dadurch gekennzeichnet, dass** er zusätzlich eine vom Rest des Fahrzeugs getrennte und diskrete Fernsteuerung (6) zum ferngesteuerten Fahren bzw. Fernfahren aufweist, die zur Steuerung der elektronischen Steuereinheit (5) eingerichtet ist.

13. Selbstangetriebener Wagen nach einem der vorhergehenden Ansprüche, wobei der Motor (15) ein Elektro- oder Hydraulikmotor ist.

14. Selbstangetriebener Wagen nach einem der vorangehenden Ansprüche, wobei die Bezugsachse (A) vertikal ist.

15. Selbstangetriebener Wagen nach einem der vorhergehenden Ansprüche, wobei die horizontale Achse (12) außerdem ein mechanisches Zwischengelenk (21) aufweist, das zwischen der zentralen Nabe (17) und dem Gelenk (18) angeordnet ist und es der zentralen Nabe (17) ermöglicht, sich frei um einige Grad um eine dritte Achse (C) zu drehen/schwenken, die senkrecht und koplanar zu der ersten Achse (B) und der Raddrehachse (R) verläuft.

## Revendications

1. Chariot autopropulsé (1) pour transporter des charges lourdes, du type comprenant : un châssis (2) ayant, sur le dessus, un plateau de chargement sensiblement horizontal (3) sur lequel repose l'article à transporter ; et une série d'ensembles de roues pivotantes (4) qui sont situés sous le châssis (2), chacun ayant la capacité de tourner, sur commande, autour d'un axe de référence respectif (A) ;
chaque ensemble de roue pivotante (4) comprenant : un palier de pivotement (10) qui est fixé au châssis (2) avec la capacité de tourner autour dudit axe de référence (A) ; un servomoteur (11) qui est adapté pour faire tourner, sur commande, le palier de pivotement (10) autour dudit axe de référence (A) ; un essieu horizontal (12) qui est situé sous le palier de pivotement (10), est relié au palier de pivotement (10) de façon à tourner avec ce dernier, et est pourvu d'au moins deux roues d'appui au sol (13) coaxiales l'une à l'autre ; et une suspension active (14) qui est interposée entre l'essieu horizontal (12) et le palier de pivotement (10), et qui est capable de faire varier, sur commande, la distance (d) entre le plan sur lequel repose et tourne la palier de pivotement (10) et l'axe de rotation (R) des deux roues (13) ;
l'essieu horizontal (12) d'au moins l'un desdits ensembles de roues pivotantes (4) comprenant : un moyeu central (17) qui s'étend entre les deux roues (13) de l'essieu coaxial à l'axe de rotation (R) des roues et est relié latéralement au palier de pivotement (10) par l'intermédiaire d'une charnière (18) qui permet au moyeu central (17) de pivoter autour d'un premier axe (B) qui est perpendiculaire audit axe de référence (A) et est parallèle et espacé de l'axe de rotation des roues (R) ; et un moteur (15) adapté pour entraîner en rotation les roues (13) de l'essieu autour de l'axe de rotation commun (R) ;
dans lequel le moteur (15) est situé à l'extérieur du moyeu central (17), est agencé parallèlement à l'axe de rotation des roues (R), est espacé à côté du moyeu central (17), est supporté par un support transversal (22) qui fait saillie à partir du moyeu central (17) sur le côté opposé par rapport à la charnière (18), et est relié aux roues (13) de l'essieu horizontal (12) par l'intermédiaire d'un groupe motopropulseur transversal (23).

2. Chariot autopropulsé selon la revendication 1, dans lequel le groupe motopropulseur transversal (23) est au moins partiellement logé à l'intérieur du support transversal (22).

3. Chariot autopropulsé selon la revendication 1 ou 2, dans lequel le support transversal (22) a une structure en forme de plaque perpendiculaire à l'axe de rotation des roues (R), et le moteur (15) est fixé en porte-à-faux à l'extrémité distale du support transversal (22).

4. Chariot autopropulsé selon l'une quelconque des revendications précédentes, dans lequel le moteur (15) est fixé en porte-à-faux à l'extrémité distale de ladite console de support transversale (22) de manière à s'étendre en porte-à-faux parallèlement à l'axe de rotation des roues (R).

5. Chariot autopropulsé selon l'une quelconque des revendications précédentes, dans lequel le moyeu central (17) reçoit un engrenage différentiel (19) et deux arbres d'entraînement (20) qui sont situés sur les côtés opposés de l'engrenage différentiel (19) et transmettent le mouvement de rotation de l'engrenage différentiel (19) aux roues (13) de l'essieu.

6. Chariot autopropulsé selon la revendication 5, dans lequel le groupe motopropulseur transversal (23) entraîne en rotation l'engrenage différentiel (19).

7. Chariot autopropulsé selon l'une quelconque des revendications précédentes, dans lequel le groupe motopropulseur transversal (23) comprend : une première roue dentée (26) qui est fixée de manière axialement rotative sur le support transversal (22) et qui est entraînée en rotation par le moteur (15) ; une deuxième roue dentée (27) qui est située entre les roues (13) de l'essieu et qui est destinée à entraîner en rotation lesdites roues (13) ; et au moins un troisième engrenage de transmission (28) adapté pour transmettre le mouvement de rotation de la première roue dentée (26) à la deuxième roue dentée (27).

8. Chariot autopropulsé selon l'une quelconque des revendications précédentes, dans lequel le palier de pivotement (10) est munie d'un bras transversal en saillie (16) qui s'étend en porte-à-faux vers le bas avec un angle d'inclinaison donné par rapport au plan dans lequel le palier de pivotement (10) se trouve et tourne ; l'essieu horizontal (12) étant relié de manière pivotante à l'extrémité distale du bras transversal (16) du palier de pivotement (10).

9. Chariot autopropulsé selon l'une quelconque des revendications précédentes, dans lequel la suspension active (14) comprend au moins un vérin hydraulique ou pneumatique (30) qui est interposé entre l'essieu horizontal (12) et le palier de pivotement (10).

10. Chariot autopropulsé selon la revendication 9, dans lequel l'extrémité inférieure dudit au moins un vérin hydraulique ou pneumatique (30) est reliée/articulée de manière pivotante au support transversal (22) qui supporte le moteur (15).

11. Chariot autopropulsé selon l'une quelconque des revendications précédentes, **caractérisé en ce qu'**il comprend en outre une unité de commande électronique (5) placée sur le châssis (2) et adaptée pour commander les différents ensembles de roues pivotantes (4).

12. Chariot autopropulsé selon la revendication 11, **caractérisé en ce qu'**il comprend en outre une télécommande (6) pour la conduite à distance, qui est séparée et discrète du reste du véhicule, et est adaptée pour commander l'unité de commande électronique (5).

13. Chariot autopropulsé selon l'une quelconque des revendications précédentes, dans lequel le moteur (15) est un moteur électrique ou hydraulique.

14. Chariot autopropulsé selon l'une quelconque des revendications précédentes, dans lequel ledit axe de référence (A) est vertical.

15. Chariot autopropulsé selon l'une quelconque des revendications précédentes, dans lequel l'essieu horizontal (12) comprend en outre un joint mécanique intermédiaire (21) qui est interposé entre le moyeu central (17) et la charnière (18), et permet au moyeu central (17) de tourner/basculer librement de quelques degrés autour d'un troisième axe (C) qui est perpendiculaire et coplanaire au premier axe (B) et à l'axe de rotation des roues (R).
